(19) **Europäisches Patentamt / European Patent Office / Office européen des brevets**

(11) **EP 3 391 702 B1**

(12) **FASCICULE DE BREVET EUROPEEN**

(45) Date de publication et mention de la délivrance du brevet:
**04.12.2019 Bulletin 2019/49**

(21) Numéro de dépôt: **16810301.8**

(22) Date de dépôt: **07.12.2016**

(51) Int Cl.:
*H04W 74/08* <sup>(2009.01)</sup>

(86) Numéro de dépôt international:
**PCT/EP2016/080070**

(87) Numéro de publication internationale:
**WO 2017/102498 (22.06.2017 Gazette 2017/25)**

(54) **PROCÉDÉ D'ACCÈS À UN MÉDIA DE COMMUNICATION DE TYPE CSMA**

VERFAHREN ZUM ZUGRIFF AUF EIN CSMA-KOMMUNIKATIONSMEDIUM

METHOD FOR ACCESSING A CSMA COMMUNICATION MEDIUM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **14.12.2015 FR 1562297**

(43) Date de publication de la demande:
**24.10.2018 Bulletin 2018/43**

(73) Titulaire: **Sagemcom Broadband SAS 92500 Rueil-Malmaison (FR)**

(72) Inventeur: **LALAM, Massinissa 92500 Rueil Malmaison (FR)**

(74) Mandataire: **Cabinet Le Guen Maillet 3, impasse de la Vigie CS 71840 35418 Saint-Malo Cedex (FR)**

(56) Documents cités:
**WO-A1-2015/187860       US-A1- 2015 358 904**

## Description

### DOMAINE TECHNIQUE

La présente invention concerne le domaine des réseaux de communications, plus particulièrement un procédé d'accès à un média quand des interférences sont détectées sur ce média. La présente invention concerne notamment un procédé d'adaptation d'un dispositif conforme à une norme *Wi-Fi* (*Wireless-Fidelity* en anglais) en présence d'interférences provoquées par un dispositif conforme à une norme LTE (*Long Term Evolution* en anglais) partageant la même bande de fréquence que le dispositif *Wi-Fi.*

### ETAT DE LA TECHNIQUE

*IEEE 802.11* correspond à un ensemble de normes concernant les réseaux sans fil locaux. Elles sont spécifiées au sein de l'IEEE (*Institute of Electrical and Electronics Engineers*) par un groupe de travail qui porte le même nom. Un sous ensemble de ces normes est utilisé comme base par un organisme, la *Wi-Fi Alliance,* afin de produire des programmes de certification assurant un certain niveau d'interopérabilité. Un équipement certifié par la *Wi-Fi Alliance* peut utiliser la marque *Wi-Fi.* Les termes « *IEEE 802.11* » et « *Wi-Fi* » seront ci-après utilisés indifféremment pour désigner la même chose.

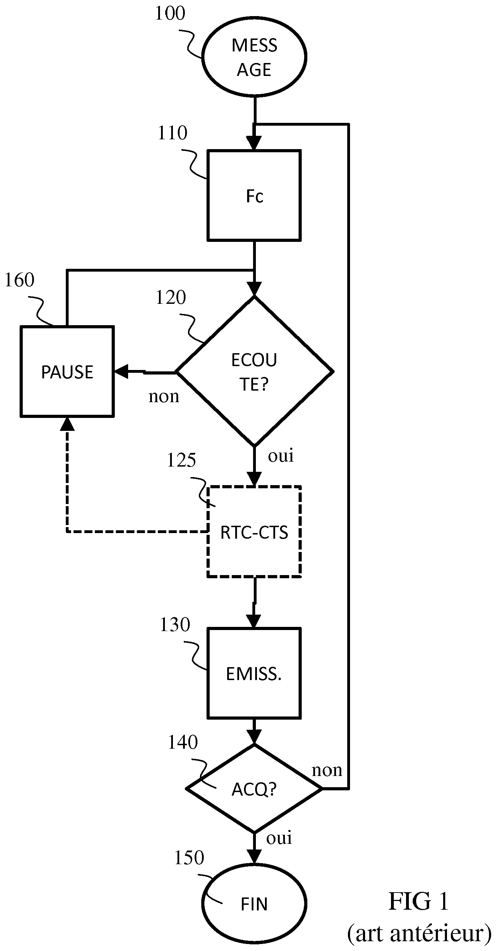

*IEEE 802.11* (ou le *Wi-Fi*) définit des protocoles (ou normes de communication) de transmission physique et d'accès à un média sans fil, le média étant typiquement un canal d'une bande de fréquences non-licenciée, par exemple une bande dite ISM (Industriel, Scientifique et Médical). *IEEE 802.11* repose sur une méthode d'accès au média de type « Écoute d'un Support à Accès Multiple » ou CSMA (*Carrier Sense Multiple Access* en anglais) avec « Evitement des Collisions » ou CA (*Collision Avoidance* en anglais). Une méthode d'accès au média CSMA/CA, et plus généralement une méthode d'accès CSMA, repose sur un principe fondateur qu'un équipement voulant émettre un message sur le média doit vérifier si le média est disponible avant d'émettre le message (principe du « écouter avant d'émettre » ou *Listen Before Talk,* LBT, en anglais). Afin de limiter et éviter des collisions se produisant lorsque des équipements émettent des messages en même temps sur le média, une méthode dite « *back-off exponentiel* » est mise en place. Cette méthode (illustrée en **Fig. 1**) décrit le procédé suivi par un dispositif utilisant une méthode d'accès à un média de type ISM conformément à *IEEE 802.11.* L'étape 100 correspond à une phase d'initialisation du processus, se produisant typiquement lorsque le dispositif doit émettre un message, c'est-à-dire qu'une trame ou un paquet de données est à émettre sur le média, soit tout de suite après une émission réussie ou soit après détermination que le média était occupé à l'instant de l'émission du message. Avant de pouvoir transmettre ce message, le dispositif détermine une valeur d'un compteur de temps, cette valeur du compteur de temps étant choisie aléatoirement dans un intervalle de temps appelé « fenêtre de contention » (Fc). Puis, dans des étapes suivantes 120 et 160, le dispositif se met en écoute sur le média. Si le média est occupé (étape 160), la valeur du compteur de temps est figée, autrement, la valeur du compteur de temps est décrémentée. Possiblement, la valeur du compteur de temps est exprimée sous forme d'un nombre déterminé de créneaux de temps (*time slot* en anglais). A l'expiration du compteur de temps, le message est émis dans une étape 130. Si un acquittement (ACQ) est reçu (étape 140) alors le message est considéré reçu, et le procédé prend fin (étape 150). Si aucun acquittement n'est reçu (étape 140), le message n'est pas considéré reçu et doit être réémis (retour vers l'étape 110). Dans cette nouvelle mise en œuvre de l'étape 110, le dispositif augmente la taille de la fenêtre de contention (typiquement la taille de la fenêtre de contention est doublée à chaque mise en œuvre de l'étape 110, et ce jusqu'à une valeur maximale prédéfinie). Puis le dispositif choisit une nouvelle valeur de compteur de temps dans ce nouvel intervalle de temps défini par la fenêtre de contention de taille augmentée. Les étapes 110, 120, 130 et 140 sont répétées jusqu'à une bonne transmission du message. Lors de l'émission d'un nouveau message, le procédé recommence à l'étape 100, la valeur de la fenêtre de contention étant réinitialisée à sa valeur initiale. Il est à noter que lors de l'exécution du procédé, lorsque la taille de la fenêtre de contention a atteint sa valeur maximale prédéfinie, cette valeur maximale prédéfinie est conservée durant un certain nombre de tentatives de transmission du message avant d'être possiblement réinitialisée à sa valeur initiale par le dispositif. Il est aussi à noter qu'une étape additionnelle 125 de type *RTS-CTS* (*Ready To Send / Clear To Send* en anglais) peut être mise en œuvre afin de réduire des risques de collisions lors de la transmission d'un message.

Dans ce procédé, selon le standard *IEEE 802.11,* le média est considéré occupé si :

- un signal quelconque d'une puissance supérieure à un premier seuil de puissance noté « *CCA-ED* » (*Clear Channel Assessment - Energy Detection*, en anglais) est détecté par le dispositif, ou,
- un signal conforme à une norme *IEEE 802.11* d'une puissance supérieure à un deuxième seuil de puissance dit sensibilité minimale (*Minimal Sensitivity,* en anglais) noté « *CCA-SD* » (*Clear Channel Assessment - Signal Detection,* en anglais) est détecté par le dispositif.

Typiquement, une valeur du premier seuil de puissance *CCA-ED* est de -62 dBm et une valeur du deuxième seuil de puissance *CCA-SD* est de -82 dBm.

Lorsque plusieurs dispositifs conformes à la norme *IEEE 802.11* opèrent sur un même média, ce procédé d'accès se révèle de manière générale efficace et équitable pour le partage du média entre les différents dispositifs, c'est-à-dire pour un partage équitable de la bande passante disponible pour l'émission de messages par chaque dispositif.

Il est envisagé aujourd'hui que des dispositifs conformes à des normes de type LTE (*Long Term Evolution* en anglais, évolution des normes de téléphonie mobile dite « 4G ») puissent utiliser ces mêmes bandes de fréquences non licenciées ISM. Des dispositifs utilisant ces deux normes - *IEEE 802.11* et LTE - doivent alors se partager un même média, ce qui pose un problème de partage équitable du média entre des dispositifs utilisant différentes normes de communication.

Certaines normes LTE utilisent un procédé d'accès au média similaire au standard *IEEE 802.11.* Ainsi, si les normes dites LTE-LAA (*Licensed-Assisted Access for Unlicensed Spectrum*), définies par l'organisme 3GPP (*3rd Generation Partnership Project*) utilisent un procédé d'accès au média de type « écouter avant d'émettre » (*Listen Before Talk,* LBT, en anglais), ce n'est pas le cas de la norme LTE-U (*LTE in unlicensed spectrum*) définie par le forum LTE-U.

Ainsi, un dispositif conforme à la norme LTE-U définit un fonctionnement où un dispositif alterne entre des périodes d'émissions en continu et des périodes sans émission (*duty cycle* en anglais). Pendant la période d'émission, le dispositif LTE-U monopolise l'accès au média, sans possibilité de partage de l'accès au média avec un autre dispositif tel un dispositif *IEEE 802.11* pendant ce temps.

Si la norme LTE-LAA introduit bien un procédé d'accès au média de type LBT, la mise en œuvre du procédé de type LBT est toutefois différente. Ainsi, la norme définie par le 3GPP dite « *LTE-LAA cat3* » utilise une fenêtre de contention de taille figée ou fixe, et non variable comme dans les normes *IEEE 802.11.* Elle correspond à l'option B de la norme définie par l'ETSI (*EN 301 893 v1.8.1 - 2015-03*). Une autre mise en œuvre de cette norme définie par le 3GPP dite « *LTE-LAA cat4* », utilise bien une fenêtre de contention de taille variable de façon similaire à *IEEE 802.11,* mais toutefois la taille de la fenêtre de contention varie selon un autre critère que le non acquittement d'un message transmis et sa taille est réinitialisée à sa valeur initiale après qu'elle ait atteint sa valeur maximale. Elle correspond à l'option A de la norme définie par l'ETSI (*EN 301 893 v1.8.1 - 2015-03*). Là encore, des dispositifs utilisant une norme de communication de type LTE-LAA (cat3 ou cat4) auront tendance à accaparer une bande passante disponible sur le média au détriment de dispositifs mettant en œuvre des normes *IEEE 802.11.*

Le document WO 2013112983 propose une méthode permettant la coexistence de différentes technologies de radiocommunications sur une même bande de fréquence, mais ce document repose sur une nécessité de coopération entre les systèmes concernés. Le prérequis est particulièrement contraignant, demandant à ce que la solution soit déployée sur les deux systèmes.

Les documents US 20130343288 et US 20150215100 proposent des solutions permettant d'améliorer la coexistence entre des systèmes LTE et *IEEE 802.11,* mais ces solutions ne sont mises en œuvre que sur les systèmes de type LTE. Ces solutions favorisent toutefois les communications LTE et laissent un système *Wi-Fi* sans défense face à un système LTE perturbateur qui n'utiliserait pas ces solutions.

Il est donc souhaitable de proposer un procédé d'adaptation d'une méthode d'accès à un média conforme à un standard de type *IEEE 802.11* utilisée par un premier dispositif lorsque d'autres dispositifs utilisant une norme de type LTE ont accès au même média.

EXPOSE DE L'INVENTION

A cet effet, il est proposé un procédé d'accès à un média de communication sans fil, l'accès étant de type « *écoute d'un support à accès multiple* » CSMA, dans lequel un dispositif, dit dispositif émetteur, voulant émettre un message sur ledit média vérifie si ledit média est disponible avant d'émettre ledit message, le média étant occupé lorsqu'un signal provenant d'un autre dispositif et détecté par ledit dispositif émetteur possède une puissance supérieure à un seuil de puissance prédéterminé.

Le procédé comprend, lorsqu'il est exécuté par un premier dispositif, les étapes suivantes : déterminer une proportion d'une première durée d'observation pendant laquelle le premier dispositif détecte un signal interférant de puissance supérieure audit seuil de puissance, le signal interférant étant émis par un deuxième dispositif accédant au média, et, si ladite proportion est supérieure à une valeur prédéfinie, alors, modifier la valeur du seuil de puissance en l'abaissant.

Avantageusement, abaisser la valeur du seuil de puissance permet au dispositif mettant en œuvre le procédé d'adaptation d'être plus sensible aux signaux détectés sur le média. Ainsi, un dispositif mettant en œuvre l'invention est plus sensible à la présence de signaux sur le média et ne tentera pas d'émettre un message qui n'aurait probablement pas été correctement réceptionné par le dispositif destinataire.

Selon un mode de réalisation complémentaire de l'invention, le procédé d'accès au média de communication utilisant une fenêtre de contention, de taille pouvant varier entre une taille initiale et une taille maximale supérieure à la taille initiale, pour l'émission d'un message, chaque message émis selon le procédé d'accès au média par un dispositif émetteur comprenant un préambule, le signal interférant ne correspondant pas à un tel message comprenant un préambule, le procédé comprend les étapes ultérieures suivantes : déterminer, pendant une deuxième période d'observation, une première durée cumulée pendant laquelle le signal interférant est détecté sur le média avec une puissance supérieure à la valeur modifiée du seuil de puissance, déterminer, pendant la deuxième période d'observation, une deuxième durée cumulée pendant laquelle la taille de la fenêtre de contention est supérieure à sa taille initiale, déterminer le type du signal interférant par comparaison de la première durée cumulée et de la deuxième durée cumulée.

Avantageusement, le dispositif peut caractériser la source des interférences par comparaison d'une première durée cumulée représentant un temps d'interférences issues de dispositifs non conformes à la méthode d'accès au média avec une deuxième durée cumulée représentant un temps d'interférences issues de dispositifs mettant en œuvre une méthode d'accès au média identique.

Selon un mode de réalisation complémentaire de l'invention, le procédé d'accès au média de communication comprenant une étape d'acquittement d'un message émis, le procédé d'accès au média de communication comprend les étapes ultérieures suivantes : déterminer une durée moyenne qui s'écoule entre un moment où le premier dispositif prend une décision d'émettre un message et un moment où ledit message est acquitté, si une valeur de la durée moyenne est supérieure à une valeur prédéfinie, et, si le signal interférant déterminé précédemment est d'un premier type prédéterminé, alors, modifier une gestion de la fenêtre de contention utilisée, de manière à figer la taille de la fenêtre de contention ou à réinitialiser la taille de la fenêtre de contention à sa valeur initiale lorsqu'une taille prédéfinie est atteinte.

Avantageusement, adapter la gestion de la fenêtre de contention permet de mettre en place une gestion de cette fenêtre de contention similaire à la méthode d'accès au média du dispositif provoquant les interférences et donc de rétablir un équilibre dans le partage de l'accès au média.

Selon un mode de réalisation complémentaire de l'invention, le procédé d'accès au média de communication comprend en outre les étapes suivantes : si la valeur de la durée moyenne est supérieure à une valeur prédéfinie, et, si le signal interférant déterminé précédemment n'est pas dudit premier type, alors, émettre un message à destination d'un troisième dispositif, le message comprenant une demande d'information sur la mise en œuvre du procédé d'accès au média de communication par le deuxième dispositif et déterminer, à partir d'un message reçu en réponse audit message comprenant une demande d'information, si la source d'interférence met en œuvre le présent procédé d'accès à un média de communication.

Selon un mode de réalisation complémentaire de l'invention, le média est un média de type radio.

Selon un mode de réalisation complémentaire de l'invention, le procédé d'accès au média de communication est conforme à un standard de communication de type *IEEE 802.11* tant que le seuil de puissance ou la gestion de la fenêtre de contention n'est pas modifié.

Selon un mode de réalisation complémentaire, le procédé d'accès au média de communication comprend en outre l'étape suivante, quand le seuil de puissance ou la gestion de la fenêtre de contention est modifié, d'émettre un message indiquant que des interférences ont été détectées sur le média, le message comprenant la valeur modifiée du seuil de puissance ou une indication de la modification de la fenêtre de contention, l'émission du message se faisant périodiquement ou suite à la réception d'une requête.

La présente invention concerne également un dispositif comprenant des moyens d'accès à un média de communication sans fil, l'accès étant de type « *écoute d'un support à accès multiple* » CSMA, dans lequel un dispositif, dit dispositif émetteur, voulant émettre un message sur ledit média vérifie si ledit média est disponible avant d'émettre ledit message, le média étant occupé lorsqu'un signal provenant d'un autre dispositif et détecté par ledit dispositif émetteur possède une puissance supérieure à un seuil de puissance prédéterminé. Le dispositif comprend des moyens pour déterminer une proportion d'une durée d'observation pendant laquelle le dispositif détecte un signal interférant de puissance supérieure au seuil de puissance, le signal interférant étant émis par un autre dispositif accédant au média et des moyens pour modifier la valeur du seuil de puissance en l'abaissant si cette proportion est supérieure à une valeur prédéfinie.

La présente invention concerne également un programme d'ordinateur, comprenant des instructions pour mettre en œuvre, par un processeur, le procédé d'accès au média de communication selon l'invention, lorsque ledit programme d'ordinateur est exécuté par ledit processeur.

La présente invention concerne également des moyens de stockage stockant ledit programme d'ordinateur.

BREVE DESCRIPTION DES DESSINS

Les caractéristiques de l'invention mentionnées ci-dessus, ainsi que d'autres, apparaîtront plus clairement à la lecture de la description suivante d'un exemple de réalisation, ladite description étant faite en relation avec les dessins joints, parmi lesquels :

la **Fig. 1** est une illustration schématique d'un procédé connu d'accès à un média conforme à la norme *IEEE 802.11* ;
la **Fig. 2** est une représentation schématique d'un exemple de système mettant en œuvre un procédé d'adaptation, selon un mode de réalisation de l'invention, à une source d'interférences compris dans une méthode d'accès à un média de type CSMA, par exemple *IEEE 802.11* ;
la **Fig. 3** est une illustration schématique d'un exemple d'architecture matérielle d'un dispositif pouvant mettre en œuvre l'invention ;
la **Fig. 4** est une illustration d'un procédé, selon un mode de réalisation de l'invention, d'adaptation à une source d'interférences d'une méthode d'accès à un média de type *IEEE 802.11.*

EXPOSE DETAILLE DE MODES DE REALISATION

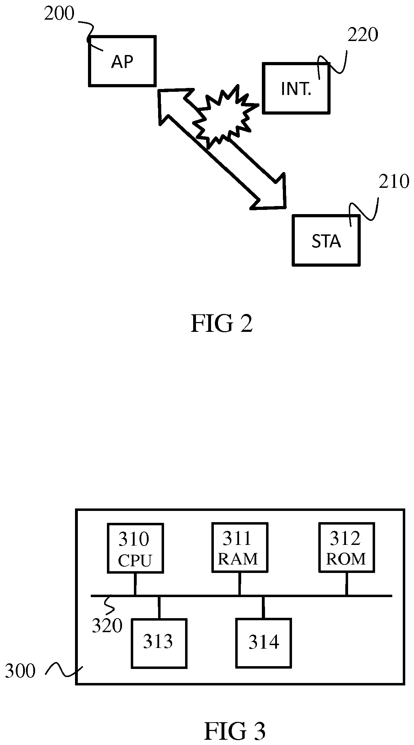

La **Fig. 2** est une représentation schématique d'un exemple de système mettant en œuvre un procédé d'adaptation, selon un mode de réalisation de l'invention, à une source d'interférences compris dans une méthode d'accès à un média de type CSMA, par exemple *IEEE 802.11.* Des dispositifs 200 et 210 sont aptes à mettre en œuvre une norme de communication conforme à une norme *IEEE 802.11* ou des dispositifs certifiés *Wi-Fi*. Ces dispositifs peuvent donc communiquer, c'est-à-dire envoyer et recevoir des messages, via un média, ce média étant une bande de fréquence radio. Cette bande de fréquence est typiquement une bande de fréquence ne nécessitant pas de licence pour son utilisation, par exemple une bande de fréquence dite ISM. La bande de fréquence est possiblement scindée en différents canaux, chaque canal étant utilisable par les dispositifs 200 et 210. Le dispositif 200 est typiquement un point d'accès *Wi-Fi* (AP, *Access Point* en anglais), par exemple un dispositif comportant des fonctions de routage et au moins des moyens de connexion à un autre réseau de communication, par exemple une connexion à Internet via un accès xDSL (*Digital Subscriber Line* en anglais). Le dispositif 210 est typiquement une station (STA), c'est-à-dire un équipement pouvant se connecter via une connexion *Wi-Fi* à un point d'accès *Wi-Fi* tel le dispositif 200. Selon un mode de réalisation complémentaire, les dispositifs 200 et 210 sont tous les deux des points d'accès *Wi-Fi* ou tous les deux des stations *Wi-Fi,* par exemple connectées directement via une connexion dite « *ad-hoc* ». On parle de réseau *Wi-Fi* lorsque plusieurs dispositifs, tels les dispositifs 200 et 210, sont connectés entre eux par une technologie *Wi-Fi*. Un réseau *Wi-Fi* (ou *IEEE 802.11*) comprend un point d'accès (dispositif 200) et une pluralité de stations tel le dispositif 210, un réseau *Wi-Fi* donné étant identifié par un paramètre SSID (*Service Set IDentifier* en anglais).

Un dispositif 220 comporte au moins une interface de communication conforme à une norme LTE ou « 4G ». Possiblement, cette norme LTE permet l'utilisation de la bande de fréquence non licenciée utilisée par les dispositifs 200 et 210 pour communiquer en *Wi-Fi.* Le dispositif 220 est donc une source d'interférence (INT.) pour les communications *Wi-Fi* lorsqu'il émet selon la norme LTE sur le même canal que celui qui est utilisé par les dispositifs 200 et 210. Dit autrement, le dispositif 220 perturbe les communications entre les dispositifs 200 et 210 quand il émet des messages. L'émission d'un message se traduit par l'émission par le dispositif 220 d'un signal conforme à la norme LTE sur le canal commun, ce signal dit LTE vient perturber les communications *Wi-Fi* entre les équipements 200 et 210.

La **Fig. 3** illustre schématiquement un exemple d'architecture matérielle d'un dispositif 300. Le dispositif 300 est le dispositif 200 ou le dispositif 210 de la Fig. 2.

Le dispositif 300 comporte, reliés par un bus de communication 320 : un processeur ou CPU (*Central Processing Unit*) 310 ; une mémoire vive RAM (*Random Access Memory*) 311 ; une mémoire morte ROM (*Read Only Memory*) 312 ; une unité de stockage ou un lecteur de support de stockage, tel qu'un lecteur de cartes SD (Secure Digital) ou un disque dur HDD (*Hard Disk Drive*) 313 ; et au moins une interface réseau ou module radio 314 permettant au dispositif 300 d'accéder à un média, par exemple de type radio fréquence. L'interface réseau 314 peut être conforme à des normes de communications *IEEE 802.11* et ainsi permettre au dispositif 300 d'accéder à une bande de fréquence dite ISM pour se connecter à d'autres dispositifs mettant en œuvre cette même norme. L'interface réseau 314 peut ainsi accéder à différents canaux prédéfinis au sein d'une bande de fréquence et échanger des messages avec d'autres dispositifs compatibles, c'est-à-dire émettre des messages vers un autre dispositif et recevoir des messages de cet autre dispositif.

Le processeur 310 est capable d'exécuter des instructions chargées dans la RAM 311 à partir de la ROM 312, d'une mémoire ou support de stockage, interne ou externe, 313 ou d'un réseau de communication via l'interface réseau 314. Lorsque le dispositif 300 est mis sous tension, le processeur 310 est capable de lire dans la RAM 311 des instructions et de les exécuter. Ces instructions forment un programme d'ordinateur permettant la mise en œuvre ou l'exécution, par le processeur 310, de tout ou partie des modules, procédés et étapes décrits dans le présent document.

Ainsi, tout ou partie des modules, procédés et étapes décrits dans le présent document peut être implémenté sous forme logicielle par exécution d'un ensemble d'instructions par une machine programmable, tel qu'un DSP (Digital Signal Processor) ou un microcontrôleur. Tout ou partie des modules, procédés et étapes décrits ci-après peut aussi être implémenté sous forme matérielle par une machine ou un composant dédié, tel qu'un FPGA (*Field-Programmable Gate Array* en anglais) ou un ASIC (*Application-Specific Integrated Circuit* en anglais).

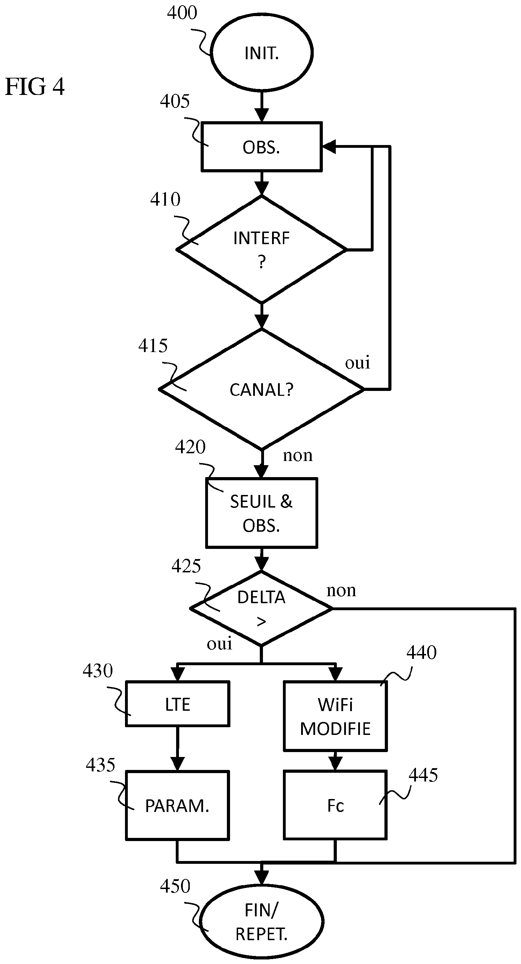

La **Fig. 4** est une illustration d'un procédé, selon un mode de réalisation de l'invention, d'adaptation à une source d'interférences d'une méthode d'accès à un média de type *IEEE 802.11*. Le procédé est mis en œuvre par le dispositif 300, qui peut être le dispositif 200 ou le dispositif 210 de la Fig. 2, les dispositifs 200 et 210 échangeant des messages conformément à la norme *IEEE 802.11* sur un média, par exemple un premier canal d'une bande de fréquence.

Une première étape 400 correspond à une étape d'initialisation du procédé d'adaptation. Le procédé d'adaptation peut être initié suivant différents critères. Selon un mode de réalisation de l'invention, le procédé est initié lorsque le dispositif 300 constate par exemple que son débit en émission chute ou qu'une qualité de transmission diminue. Selon un mode de réalisation de l'invention, le procédé est initié périodiquement ou après réception d'une requête provenant d'un autre dispositif, la requête comprenant une information indiquant que le procédé d'adaptation doit être initié. Selon un mode de réalisation de l'invention, le procédé est réalisé de façon continue par le dispositif 300, c'est-à-dire que les étapes décrites ci-après, particulièrement les étapes comprenant des phases d'évaluation de paramètres, peuvent être réalisées en continu.

Une étape 405 correspond à une phase d'observation du média. Cette phase d'observation est mise en œuvre durant une première durée d'observation $T_{obs1}$. $T_{obs1}$ est typiquement de l'ordre de quelques secondes. Selon un mode de réalisation de l'invention, comme dit précédemment, cette phase d'observation peut être réalisée de façon ponctuelle ou périodique. Selon un mode de réalisation de l'invention alternatif, la phase d'observation est mise en œuvre en continue sur une fenêtre temporelle glissante d'une durée égale à la première durée d'observation $T_{obs1}$. Durant cette phase d'observation, le dispositif 300 détermine une durée $T_{ED1}$. La durée $T_{ED1}$ est une durée cumulée comptabilisant pendant combien de temps un signal non conforme à *IEEE 802.11* est détecté sur le média pendant la durée d'observation $T_{obs1}$. Le standard *IEEE 802.11* prévoit qu'un message émis en conformité avec ce standard comprenne un préambule. Ainsi, chaque message émis selon le procédé d'accès au média par un dispositif émetteur comprend un préambule. Un signal ne comprenant pas un tel préambule est considéré non conforme. Un signal non conforme à *IEEE 802.11* est considéré comme détecté s'il possède une puissance captée par le dispositif 300 supérieur au premier seuil de puissance *CCA-ED,* soit typiquement -62 dBm. Cette durée cumulée $T_{ED1}$ correspond à la durée cumulée pendant laquelle un signal autre que *Wi-Fi* (ou *IEEE 802.11*) est détecté sur le média durant la phase d'observation, ce signal possédant une puissance mesurée supérieure au seuil de puissance *CCA-ED*.

Le dispositif 300 détermine durant cette même première durée d'observation $T_{obs1}$ la durée cumulée Tcw pendant laquelle la taille de la fenêtre de contention du dispositif 300 est supérieure à sa taille initiale. La taille de la fenêtre de contention varie selon les principes de la norme *IEEE 802.11* décrits plus haut. Cette durée $T_{CW}$ est déterminée ainsi :

- démarrage d'un compteur de temps lors d'une première augmentation de la taille de la fenêtre de contention provoquée par la non réception d'un acquittement suite à une première émission d'un message,
- arrêt du compteur de temps lorsque la taille de la fenêtre de contention est réinitialisée à sa taille initiale.

La taille de la fenêtre de contention est réinitialisée à sa taille initiale après réception par le dispositif 300 d'un acquittement, signifiant que le message envoyé a bien été reçu ou lorsqu'un nombre prédéterminé de retransmissions du message a été atteint.

$T_{CW}$ est le temps cumulé mesuré par ce compteur de temps, compteur de temps qui peut être démarré et arrêté plusieurs fois durant la première durée d'observation $T_{obs1}$. $T_{CW}$ correspond à un temps cumulé pendant la première durée d'observation $T_{obs1}$ pendant lequel le dispositif 300 est en attente de l'acquittement d'une réémission d'un message suite à une première émission du message non acquittée. Une ou plusieurs réémissions peuvent alors avoir lieu. Cette situation peut particulièrement survenir lorsque des interférences perturbent l'émission des messages par le dispositif 300. En présence d'un dispositif 300 mettant en œuvre une norme selon *IEEE 802.11* comportant une technologie de type RTS-CTS décrite lors de l'étape 125 en Fig.1, il est alors très probable que les interférences soient dues à au moins un dispositif perturbateur non conforme à cette norme *IEEE 802.11* et donc possiblement que ce dispositif perturbateur soit conforme à une norme de type LTE utilisant le même média.

Le dispositif 300 détermine un temps d'interférence $T_{INT}$ comme étant la somme de $T_{ED1}$ et de $T_{CW}$ :

$$T_{INT} = T_{ED1} + T_{CW}$$

Il est à noter que la valeur du temps d'interférence $T_{INT}$ peut être supérieure à $T_{obs1}$ puisque $T_{ED1}$ et $T_{CW}$ peuvent se recouvrir.

Selon des modes de réalisation alternatifs de l'invention, le dispositif 300 peut utiliser comme valeur du temps d'interférence $T_{INT} = T_{ED1}$ ou $T_{INT} = T_{CW}$ plutôt que la somme des deux paramètres $T_{ED1}$ et $T_{CW}$.

Dans une étape 410, le dispositif détermine alors un premier ratio $R_{INT}$ entre le temps d'interférence $T_{INT}$ et la première durée d'observation $T_{obs1}$ :

$$R_{INT} = T_{INT} / T_{obs1}$$

Le dispositif 300 détermine si la valeur de ce ratio $R_{INT}$ est supérieure ou égale à une valeur prédéfinie $R_{seuil1}$. Si c'est le cas, le dispositif 300 considère que des interférences sont présentes sur le média et que ces interférences sont possiblement de type LTE. Selon un mode de réalisation de l'invention, un premier mécanisme de correction est mis en œuvre dans une étape suivante 415. Si $R_{INT} < R_{seuil1}$, le dispositif 300 recommence une étape d'observation 405, possiblement après un temps de pause. Alternativement, la phase d'observation réalisée durant l'étape 405 peut être réalisée en continu, ainsi que l'évaluation de la valeur $R_{INT}$, la phase d'observation se faisant sur une fenêtre temporelle glissante de taille $T_{obs1}$.

Selon un mode de réalisation de l'invention, le dispositif 300 émet un message comprenant au moins une information indiquant que des interférences ont été détectées sur le canal. Ce message peut comprendre les valeurs des différents paramètres calculés par le dispositif 300. Le dispositif 300 peut envoyer ce message aux dispositifs avec lesquels il est en communication, c'est-à-dire aux stations connectées dans le cas où le dispositif 300 est un point d'accès, ou au point d'accès auquel le dispositif 300 est connecté dans le cas où le dispositif 300 est une station. Le message peut aussi être émis suite à la réception d'un message comprenant une requête reçue d'un autre dispositif. Un dispositif recevant un tel message comprenant une information indiquant une présence d'interférence sur un canal peut enregistrer cette information en association avec ledit canal, possiblement durant une durée prédéfinie.

Si $R_{INT}$ est supérieur ou égal à $R_{seuil1}$, le dispositif 300 essaye de changer de canal d'émission dans une étape 415 afin de basculer vers un canal sans interférence. Selon que le dispositif 300 soit un point d'accès 200 ou une station 210, l'étape 415 de changement de canal peut être conduite différemment.

Si le dispositif 300 est un point d'accès, le dispositif 300 peut sélectionner un canal différent parmi différents canaux possibles dans la bande de fréquence. Le dispositif 300 utilise alors des critères de sélection d'un nouveau canal connus. Selon un mode de réalisation de l'invention, le dispositif 300 ajoute aux critères de sélection connus au moins un critère basé sur des informations reçues d'autres dispositifs indiquant une détection d'interférence selon le présent procédé et précédemment conservées. Si un nouveau canal est sélectionné, le dispositif 300 émet un message à destination des stations connectées, le message comprenant une information sur le changement de canal de communication et possiblement une raison à ce changement. Le dispositif 300 émet pour cela une trame telle que décrite dans la norme *IEEE 802.11*-2012 au chapitre 8.4.2.21, possiblement complétée d'un champ comportant la raison pour le changement de canal. Le changement de canal est ensuite mis en œuvre par le point d'accès après une durée prédéterminée connue des stations.

Si le dispositif 300 est une station, selon un mode de réalisation de l'invention, le dispositif 300 cherche à se connecter au point d'accès en utilisant un autre canal si le point d'accès offre cette possibilité (pluralité de canaux disponibles en même temps). Selon un autre mode de réalisation de l'invention, le dispositif 300 cherche à se connecter à un autre point d'accès utilisant un autre canal. Possiblement, si le dispositif 300 se déconnecte d'un point d'accès, un message est envoyé à ce point d'accès comprenant une information sur la raison de la déconnexion, indiquant par exemple un niveau d'interférence détectée, le niveau d'interférence étant déterminé par exemple selon la valeur du ratio $R_{INT}$. Selon un mode de réalisation de l'invention, le dispositif 300 indique aussi, lors de la connexion à un nouveau point d'accès, la raison de sa connexion, c'est-à-dire qu'un canal avec des interférences a été détecté. Le dispositif 300 émet pour cela une trame, dite trame de gestion (« *management* » en anglais), telle que décrite dans la norme *IEEE 802.11*-2012, chapitre 8.3.3, complétée d'un champ indiquant la cause du changement de canal. Plus particulièrement, une trame, dite trame d'association, ou une trame, dite trame de dé-association, définies dans la norme *IEEE 802.11*-2012, chapitres 8.3.3.4 et 8.3.3.5, peuvent être émises comprenant en outre une information indiquant la raison du changement de canal. Selon un mode de réalisation de l'invention, plusieurs éléments sont compris en association avec l'information indiquant la raison du changement de canal, par exemple au moins un des paramètres ayant donné lieu à la prise de décision du changement de canal (valeurs de *CCA-ED*, $T_{ED1}$, $T_{CW}$, $T_{INT}$, $T_{obs1}$, $R_{seuil1}$, $R_{INT}$, ...). Un dispositif qui reçoit de tels messages peut enregistrer les informations reçues, par exemple en association avec le canal concerné.

S'il n'est pas possible de changer de canal, ou si le changement de canal ne résout pas le problème d'interférence, alors une étape 420 de caractérisation de la source d'interférence est mise en œuvre. L'étape 420 comprend une première action de modification par le dispositif 300 de la valeur utilisée pour le paramètre *CCA-ED*, la modification consistant en un abaissement de cette valeur. Le paramètre *CCA-ED* correspond à un premier seuil de puissance. Comme décrit précédemment, le dispositif 300 voulant transmettre un message et détectant un signal d'une puissance supérieure à la valeur du paramètre *CCA-ED* sur le canal en déduit que le canal est occupé et reporte la transmission d'un message à émettre. Abaisser la valeur du paramètre *CCA-ED* permet d'éviter que le dispositif 300 n'émette un message alors qu'un signal, d'une puissance inférieure à la valeur initiale du paramètre *CCA-ED*, c'est-à-dire -62 dBm, est détecté sur le canal, sachant que très probablement ce signal perturbera la transmission du message. Selon un mode de réalisation de l'invention, la nouvelle valeur de *CCA-ED* est choisie identique à la valeur de la sensibilité minimale CCA-SD, c'est-à-dire -82 dBm. Le dispositif 300, à partir de l'étape 420, met donc en œuvre une norme de communication conforme à *IEEE 802.11*, en modifiant toutefois la valeur du paramètre *CCA-ED*, normalement fixée à -62 dBm, par une valeur plus faible, typiquement de -82 dBm. Le dispositif 300 peut émettre un message comportant une information indiquant qu'il met en œuvre la norme *IEEE 802.11* avec une valeur modifiée de *CCA-ED*, le message comprenant cette valeur modifiée. Le dispositif 300 peut émettre ce message de façon périodique ou intégrer cette information en complément dans un message émis régulièrement, par exemple un message dit « de balise » (« *beacon* » en anglais) si le dispositif 300 est un point d'accès.

Abaisser la valeur de *CCA-ED*, par exemple à -82 dBm, permet avantageusement au dispositif 300 de mieux cohabiter avec un dispositif de type LTE-U, le dispositif 300 n'essayant pas d'émettre un message pendant les créneaux d'émission du dispositif LTE-U.

En même temps, durant l'étape 420, le dispositif 300 détermine une nouvelle valeur d'une durée cumulée $T_{ED2}$, déterminée de façon similaire à la durée cumulée $T_{ED1}$, mais en utilisant la nouvelle valeur de *CCA-ED* modifiée pour la détermination de la durée cumulée $T_{ED2}$. Selon un mode de réalisation de l'invention, la valeur de la durée cumulée $T_{ED2}$ est déterminée sur une deuxième durée d'observation $T_{obs2}$ différente de la première durée d'observation $T_{obs1}$. Pendant l'étape 420, le dispositif 300 détermine la durée cumulée $T_{ED2}$ pendant laquelle un signal non conforme à une norme *IEEE 802.11* est détecté sur le média, ce signal possédant une puissance captée par le dispositif 300 supérieure au nouveau seuil de puissance *CCA-ED* modifié, soit possiblement -82 dBm. Cette durée cumulée $T_{ED2}$ correspond à la durée cumulée pendant laquelle un signal autre que *Wi-Fi* (ou *IEEE 802.11*) est détecté sur le média durant la deuxième durée d'observation $T_{obs2}$, ce signal possédant une puissance mesurée supérieure au nouveau seuil de puissance *CCA-ED* modifié. La durée cumulée $T_{ED2}$ est une représentation du temps d'occupation durant la durée d'observation $T_{obs2}$ du média par un dispositif non conforme à une norme *IEEE 802.11,* c'est-à-dire probablement un dispositif LTE opérant sur le même canal que celui utilisé par le dispositif 300. Durant la deuxième durée d'observation $T_{obs2}$, le dispositif 300 détermine également l'évolution temporelle des périodes de temps pendant lesquelles un signal non conforme à une norme *IEEE 802.11* est détecté sur le média, en plus d'en faire la somme pour déterminer $T_{ED2}$. Plusieurs cas sont possibles :

- si l'évolution temporelle durant la durée d'observation $T_{obs2}$ de la puissance du signal non conforme à *IEEE 802.11* est de type périodique rectangulaire, avec une période caractérisée par un signal d'un niveau de puissance relativement fort et une autre période caractérisée par un niveau de puissance faible voire nulle, alors le dispositif 300 peut en conclure que le dispositif interférant est probablement de type LTE-U ;
- si l'évolution temporelle durant la durée d'observation $T_{obs2}$ de la puissance du signal non conforme à *IEEE 802.11* n'est pas de type périodique rectangulaire, mais que la valeur du paramètre $T_{ED2}$ est supérieure à une valeur seuil prédéterminée $T_{seuil2}$, alors le dispositif 300 peut en conclure que le dispositif interférant est probablement de type LTE-LAA (cat3 ou cat4).

Selon un mode de réalisation de l'invention, le dispositif 300 met en œuvre des procédés complémentaires à l'analyse de l'évolution temporelle de la puissance du signal interférant afin de déterminer le type de dispositif à la source des interférences.

Par exemple, le dispositif 300 émet une requête à destination d'autres dispositifs, mettant en œuvre le présent procédé, et avec lequel il peut entrer en communication afin de recevoir en retour des informations sur de possibles dispositifs interférents détectés. Si le dispositif 300 est un point d'accès, il peut ainsi émettre une requête à destination des stations connectées ou d'autres points d'accès à proximité.

Selon un mode de réalisation de l'invention, le dispositif 300 émet une requête à destination d'un premier serveur, le premier serveur comprenant une base de données comprenant une liste de dispositifs présents dans un environnement proche du dispositif 300, ainsi que du type de technologie radio qu'ils mettent en œuvre, ou peuvent mettre en œuvre. Dit autrement, chaque dispositif de la liste est associé à un type de technologie ou procédé d'accès au média (par exemple : Wi-Fi, Wi-Fi modifié conformément au procédé de la présente invention, LTE-U, LTE-LAA cat3, LTE-LAA cat4, ...). Par environnement proche, il faut comprendre par exemple à portée d'émission ou de réception radio du dispositif 300. Le dispositif 300 peut ainsi recevoir en retour une liste de dispositifs interférant. Toutefois, il peut être difficile de garantir la complétude ou de maintenir à jour une telle liste, un dispositif Wi-Fi ou LTE étant fréquemment un dispositif par nature mobile.

Selon un mode de réalisation de l'invention, le dispositif émet le message à destination du premier serveur avec une information concernant sa position géographique, obtenue via un module de positionnement (par exemple GPS, *Global Positioning System* en anglais) compris dans le dispositif 300. Le dispositif 300 peut aussi déduire de sa localisation géographique quel type de dispositif LTE est susceptible d'être dans son voisinage (LTE-U est par exemple une norme LTE présente principalement aux Etats-Unis).

Selon un mode de réalisation, le dispositif 300 comprend un module radio conforme à une norme LTE et peut récupérer via ce module radio des informations sur des dispositifs émettant selon la norme LTE localisés à proximité du dispositif 300.

Le dispositif 300, une fois qu'il a déterminé le type probable de dispositif LTE interférant, peut émettre un message comprenant cette information. Le message peut être par exemple de type balise (« *beacon* » en anglais) et diffusé par le dispositif 300 (« *broadcasted* » en anglais). Selon un mode de réalisation, un indicateur de fiabilité, de type probabilité, est associé à cette information, correspondant à un degré de confiance que le dispositif 300 porte à la détermination du type de dispositif interférant.

Selon un mode de réalisation complémentaire de l'invention, le dispositif 300 détermine une valeur d'une durée cumulée $T_{RAT}$. $T_{RAT}$ correspond à une durée cumulée durant la deuxième période d'observation $T_{obs2}$ pendant laquelle un signal correspondant à une norme *IEEE 802.11* émis par un dispositif n'appartenant pas au même réseau *IEEE 802.11* que le dispositif 300 est détecté avec une puissance supérieure à CCA-SD. La durée cumulée $T_{RAT}$ correspond donc à une durée cumulée pendant la deuxième période d'observation $T_{obs2}$ pendant laquelle au moins un dispositif d'un autre réseau *Wi-Fi* interfère avec le dispositif 300. La comparaison des valeurs des durées cumulées $T_{ED2}$ et $T_{RAT}$ permet au dispositif 300 de déterminer si la source d'interférence est principalement de type LTE (valeur de la durée cumulée $T_{ED2}$ supérieure à la valeur de la durée cumulée $T_{RAT}$) ou principalement de type *IEEE 802.11* (valeur de la durée cumulée $T_{RAT}$ supérieure à la valeur de la durée cumulée $T_{ED2}$).

Dans une étape ultérieure 425, le dispositif 300 détermine si des mesures d'adaptation du procédé d'accès au média complémentaires doivent être mises en œuvre. Le dispositif 300 détermine une durée moyenne *DELTA* qui s'écoule entre le moment où le dispositif 300 prend une décision d'émettre un message (Fig. 1, étape 100) et le moment où ce message est effectivement émis (Fig. 1, étape 130, le message étant considéré effectivement émis lorsqu'un acquittement est reçu en retour), cette durée moyenne DELTA étant calculée par exemple pour tous les messages émis durant la deuxième période d'observation $T_{obs2}$.

*DELTA = Moyenne ($T_{ack}$ - $T_{tx}$ - Somme ($Bn.T_{slot}$)*, avec, pour chaque message émis durant la durée d'observation $T_{obs2}$:

- $T_{ack}$ représente un moment où un acquittement du message émis est reçu par le dispositif 300 après son émission (étape 130),
- $T_{tx}$ représente un moment où le dispositif 300 reçoit le message à émettre (étape 100),
- $Bn.T_{slot}$ correspond à la valeur du compteur de temps choisie au hasard dans l'intervalle de temps dit « fenêtre de contention » pour la *n*ème émission du message (*n*>0, il y a émission du même message tant qu'il n'y a pas réception d'acquittement dudit message) ; cette valeur peut être représentée par un nombre *Bn* de créneau horaire (*time slot* en anglais) multiplié par une durée $T_{slot}$ d'un créneau horaire défini selon la norme *IEEE 802.11* mise en œuvre ;
- *Moyenne(x)* est une fonction calculant une moyenne à partir de plusieurs valeurs de *x* ; cette moyenne peut être une moyenne pondérée suivant différents critères, par exemple si des critères de qualité de service (QoS, *Quality of Service* en anglais) sont mis en œuvre pour l'émission des messages,
- *Somme(x)* est une fonction calculant la somme de plusieurs valeurs de *x*.

Le dispositif 300 compare cette valeur *DELTA* avec un seuil prédéfini $DELTA_{seuil}3$, et, si la valeur de *DELTA* est supérieure à ce seuil prédéfini $DELTA_{seul3}$, le dispositif 300 décide que des actions correctives doivent être mises en œuvre pour compenser l'effet des interférences détectées. Ces actions correctives sont décrites dans des étapes 430, 435, 440, 445. Sinon, le dispositif 300 passe à une étape 450.

Dans l'étape 430, si $T_{ED2}$ est supérieur à $T_{RAT}$, ou plus généralement, si le dispositif 300 détermine que la source principale d'interférence est un dispositif de type LTE-LAA, alors le dispositif 300 met en œuvre des mesures correctives adaptées. Dans l'étape 435, le dispositif 300 :

- modifie la taille de la fenêtre de contention utilisée selon la norme *IEEE 802.11* en décidant de figer (ou fixer) cette taille à une taille prédéfinie, par exemple la taille initiale de la fenêtre de contention. Cette modification est particulièrement avantageuse si le dispositif interférant est de type LTE-LAA cat3, norme LTE utilisant elle aussi une fenêtre de contention de taille fixe. Selon un mode de réalisation de l'invention, le dispositif 300 déduit la nouvelle taille fixe de la fenêtre de contention à utiliser du type de norme LTE-LAA cat3 identifiée, par exemple en allant chercher cette information dans une base de données, ou,
- modifie le procédé de réinitialisation de la fenêtre de contention utilisée. Par exemple, le dispositif 300 décide de réinitialiser la taille de la fenêtre de contention à sa valeur initiale alors même qu'un message n'a pas encore été acquitté dès qu'elle atteint une taille prédéfinie, typiquement sa taille dite maximale selon la norme *IEEE 802.11*. Cette modification est particulièrement avantageuse lorsque le dispositif interférant est de type LTE-LAA cat4.

Selon un mode de réalisation complémentaire de la présente invention, le dispositif 300 met en œuvre alternativement les deux modifications décrites précédemment et détermine pour chaque modification une nouvelle valeur de la durée moyenne DELTA. Le dispositif 300 peut alors décider de mettre en œuvre celle des deux modifications permettant d'obtenir une valeur de DELTA la plus faible. Le dispositif 300 peut périodiquement tester l'une et l'autre des modifications et vérifier quelle modification conduit à la valeur de DELTA la plus faible.

Selon un mode de réalisation de l'invention, le dispositif 300 de type point d'accès intègre des informations, indicatives de la modification réalisée, au message de type « balise » émis périodiquement.

Selon un mode de réalisation de l'invention, le dispositif 300 émet un message à destination d'un deuxième serveur, le deuxième serveur étant possiblement le premier serveur, le message comprenant des informations sur les modifications apportées au fonctionnement de la norme *IEEE 802.11* mise en œuvre et possiblement des moyens de le localiser géographiquement.

Selon un mode de réalisation de l'invention, le dispositif 300 émet un message comprenant au moins une information indiquant que des interférences ont été détectées sur le canal et qu'éventuellement des modifications ont été mises en œuvre. Plusieurs éléments peuvent être compris en association avec l'information, par exemple au moins un des paramètres ayant donné lieu à la prise de décision de modification (valeurs de *CCA-*

ED, $T_{ED1}$, $T_{CW}$, $T_{INT}$, $T_{obs1}$, $R_{seuil1}$, $R_{INT}$, $T_{ED2}$, $T_{RAT}$, DELTA, ...). Un dispositif qui reçoit de tels messages peut enregistrer les informations reçues, par exemple en association avec le canal concerné. Le dispositif 300 peut envoyer ce message aux dispositifs avec lequel il est en communication, c'est-à-dire aux stations connectées dans le cas où le dispositif 300 est un point d'accès, ou au point d'accès auquel le dispositif 300 est connecté dans le cas où le dispositif 300 est une station. Le message peut aussi être émis suite à la réception d'un message comprenant une requête reçue d'un autre dispositif. Un dispositif recevant un tel message comprenant une information indiquant une présence d'interférences sur un canal peut enregistrer cette information en association avec ledit canal, possiblement durant une durée prédéfinie.

Dit autrement, selon un mode de réalisation de l'invention, quand le seuil de puissance ou la gestion de la fenêtre de contention est modifié, le dispositif 300 émet un message indiquant que des interférences ont été détectées sur le média, le message comprenant la valeur modifiée du seuil de puissance ou une indication de la modification de la fenêtre de contention. Le dispositif 300 peut émettre ce message de façon périodique ou sur demande, suite à la réception d'une requête.

Il est à noter que si des mécanismes de type « qualité de service » sont mis en œuvre par le dispositif 300, alors les modifications réalisées peuvent être différentes pour chaque qualité de service. Dit autrement, si le dispositif 300 met en œuvre une gestion différente de la fenêtre de contention suivant le type de message à émettre, alors la modification apportée à la gestion de la fenêtre de contention (taille fixe ou moment de réinitialisation de sa taille différent) peut aussi être adaptée selon le type de message.

Dans une étape 440, si $T_{RAT}$ est supérieur à $T_{ED2}$, ou plus généralement, si le dispositif 300 détermine que la source principale d'interférence est un dispositif de type *IEEE 802.11,* alors le dispositif 300 peut mettre en œuvre des mesures correctives adaptées dans les étapes 440 et 450.

Dans une étape 440, le dispositif 300 détermine tout d'abord si la source principale d'interférence est provoquée par un dispositif mettant en œuvre le procédé décrit dans le présent document, c'est-à-dire si le dispositif interférant met en œuvre une version modifiée de la norme *IEEE 802.11* (cf. modifications possibles décrites lors de l'étape 435).

Pour cela, le dispositif 300 peut analyser des messages de type « balise » (*beacon*) émis par le dispositif interférant, ces messages pouvant comprendre des informations sur la mise en œuvre de modifications à la norme *IEEE 802.11.*

Si c'est le cas, alors, dans une étape 450, le dispositif 300 peut mettre en œuvre ces mêmes modifications de la norme *IEEE 802.11* ou bien envoyer un message au dispositif interférant comprenant une information comme quoi ce dispositif interférant doit arrêter de mettre en œuvre ces modifications.

Dans le cas où le dispositif 300 ne peut pas déterminer si le dispositif interférant met en œuvre une version modifiée de la norme *IEEE 802.11,* ou bien si le dispositif 300 détermine que le dispositif interférant ne met pas en œuvre une version modifiée de la norme *IEEE 802.11,* alors le dispositif 300 ne modifie pas ses paramètres de fonctionnement et conservent ainsi ceux décrivant la gestion de la fenêtre de contention selon la norme *IEEE 802.11.*

Il est à noter que le présent document considère une bande de fréquence comportant une pluralité de canaux disponibles pour l'établissement de communications selon la norme *IEEE 802.11.* Plusieurs bandes de fréquence peuvent être considérées, chaque bande de fréquence comportant une pluralité de canaux, le procédé décrit précédemment, particulièrement l'étape 415 de changement de canal, pouvant s'appliquer à la somme de la pluralité des canaux des différentes bandes de fréquences.

La présente description envisage particulièrement le cas d'un dispositif mettant en œuvre des moyens de communication conformes à la norme *IEEE 802.11* et subissant des perturbations provenant de dispositifs mettant en œuvre une norme de communication de type *LTE.* Le procédé peut être mis en œuvre dans tout procédé d'accès à un média de type « *Écoute d'un Support à Accès Multiple* » ou CSMA (*Carrier Sense Multiple Access* en anglais) reposant sur un principe fondateur qu'un équipement voulant émettre un message sur le média doit vérifier si le média est disponible avant d'émettre le message (principe du « *écouter avant d'émettre* » ou *Listen Before Talk,* LBT, en anglais). Le procédé est avantageusement mis en œuvre si une méthode dite de « *back-off exponentiel* » est mise en œuvre, méthode reposant sur l'utilisation de « fenêtre de contention ». Ainsi, le procédé d'accès à un média peut être mis en œuvre pour tout média partagé, par exemple un média de type sans-fil.

Le procédé d'accès à un média de communication sans fil peut être mis en œuvre pour des dispositifs mettant en œuvre des moyens de communication conformes à la norme *LTE-U* et *LTE-LAA* (cat3 ou cat4).

Le procédé d'accès à un média de communication peut être adapté à un média filaire de type partagé, par exemple de type Ethernet.

## Revendications

1. Procédé d'accès à un média de communication, l'accès étant de type « *écoute d'un support à accès multiple* » CSMA, dans lequel un dispositif, dit dispositif émetteur, voulant émettre un message sur ledit média vérifie si ledit média est disponible avant d'émettre ledit message, le média étant occupé lorsqu'un signal provenant d'un autre dispositif et détecté par ledit dispositif émetteur possède une puissance supérieure à un seuil de puissance prédéterminé, **caractérisé en ce que** le procédé comprend, lorsqu'il est exécuté par un premier dispositif (300), les étapes suivantes de :

- déterminer une proportion d'une première durée d'observation pendant laquelle le premier dispositif (300) détecte un signal interférant de puissance supérieure au seuil de puissance, le signal interférant étant émis par un deuxième dispositif (220) accédant au média,
- si ladite proportion est supérieure à une valeur prédéfinie, alors,
- modifier le seuil de puissance en l'abaissant.

2. Procédé selon la revendication 1, le procédé d'accès au média de communication utilisant une fenêtre de contention, de taille pouvant varier entre une taille initiale et une taille maximale supérieure à la taille initiale, pour l'émission d'un message, chaque message émis selon le procédé d'accès au média par un dispositif émetteur comprenant un préambule, le signal interférant ne correspondant pas à un tel message comprenant un préambule, le procédé comprenant les étapes ultérieures suivantes :

- déterminer, pendant une deuxième période d'observation, une première durée cumulée pendant laquelle le signal interférant est détecté sur le média avec une puissance supérieure au seuil de puissance modifié,
- déterminer, pendant la deuxième période d'observation, une deuxième durée cumulée pendant laquelle la taille de la fenêtre de contention est supérieure à sa taille initiale,
- déterminer le type du signal interférant par comparaison de la première durée cumulée et de la deuxième durée cumulée.

3. Procédé selon la revendication 2, le procédé d'accès au média de communication comprenant une étape d'acquittement d'un message émis, le procédé d'accès au média de communication comprenant les étapes ultérieures suivantes :

- déterminer une valeur d'une durée moyenne qui s'écoule entre un moment où le premier dispositif (300) prend une décision d'émettre un message et un moment où ledit message est acquitté,
- si la valeur de la durée moyenne est supérieure à une valeur prédéfinie, et,
- si le signal interférant déterminé précédemment est d'un premier type prédéterminé, alors,
- modifier une gestion de la fenêtre de contention utilisée de manière à figer la taille de la fenêtre de contention ou à réinitialiser la taille de la fenêtre de contention à sa valeur initiale lorsqu'une taille prédéfinie est atteinte.

4. Procédé selon la revendication 3, le procédé d'accès au média de communication comprenant en outre les étapes suivantes :

- si la valeur de la durée moyenne est supérieure à une valeur prédéfinie, et,
- si le signal interférant déterminé précédemment n'est pas dudit premier type, alors,
- émettre un message à destination d'un troisième dispositif, le message comprenant une demande d'information sur la mise en œuvre du procédé d'accès au média de communication par le deuxième dispositif,
- déterminer, à partir d'un message reçu en réponse audit message comprenant une demande d'information, si la source d'interférence met en œuvre le présent procédé d'accès à un média de communication.

5. Procédé selon la revendication 4, le troisième dispositif étant le deuxième dispositif ou un dispositif, dit serveur, comprenant une base de données, la base de données comprenant une liste d'au moins un dispositif présent dans un environnement proche du dispositif (300), chaque dispositif de la liste étant associé à un type de procédé d'accès au média.

6. Procédé selon l'une des revendications précédentes, le média de communication étant un média de type radio.

7. Procédé selon la revendication précédente, le procédé d'accès au média de communication étant conforme à un standard de communication de type *IEEE 802.11* tant que le seuil de puissance ou la gestion de la fenêtre de contention n'est pas modifié.

8. Procédé selon l'une des revendications précédentes, le procédé d'accès au média de communication comprenant en outre les étapes suivantes :

- quand le seuil de puissance ou la gestion de la fenêtre de contention est modifié,
- émettre un message indiquant que des interférences ont été détectées sur le média, le message comprenant la valeur modifiée du seuil de puissance ou une indication de la modification de la fenêtre de contention,
- l'émission du message se faisant périodiquement ou suite à la réception d'une requête.

9. Dispositif (300) comprenant des moyens d'accès à un média de communication sans fil, l'accès étant de type « *écoute d'un support à accès multiple* » CSMA, dans lequel un dispositif, dit dispositif émetteur, voulant émettre un message sur ledit média vérifie si ledit média est disponible avant d'émettre ledit message, le média étant occupé lorsqu'un signal provenant d'un autre dispositif et détecté par ledit dispositif émetteur possède une puissance supérieure à un seuil de puissance prédéterminé, **caractérisé en ce que** le dispositif comprend :

- des moyens pour déterminer une proportion d'une durée d'observation pendant laquelle le dispositif (300) détecte un signal interférant de puissance supérieure au seuil de puissance, le signal interférant étant émis par un autre dispositif (220) accédant au média,
- des moyens pour modifier le seuil de puissance en l'abaissant si cette proportion est supérieure à une valeur prédéfinie.

10. Produit-programme d'ordinateur, **caractérisé en ce qu'**il comprend des instructions pour mettre en œuvre, par un processeur (310), le procédé d'accès au média de communication selon l'une quelconque des revendications 1 à 8, lorsque ledit programme d'ordinateur est exécuté par ledit processeur (310).

11. Moyens de stockage, **caractérisés en ce qu'**ils stockent un programme d'ordinateur selon la revendication précédente.

**Patentansprüche**

1. Verfahren zum Zugriff auf ein Kommunikationsmedium, wobei der Zugriff vom Typ "Mehrfachzugriff mit Trägerprüfung" (Carrier Sense Multiple Support, CSMA) ist, wobei eine "Sendevorrichtung" genannte Vorrichtung, die eine Nachricht auf diesem Medium senden möchte, überprüft, ob das Medium verfügbar ist, bevor sie die Nachricht sendet, wobei das Medium belegt ist, wenn ein Signal, das von einer anderen Vorrichtung stammt und von der Sendevorrichtung detektiert wird, eine Leistung besitzt, die höher als ein vorbestimmter Leistungsschwellenwert ist, **dadurch gekennzeichnet, dass** das Verfahren, wenn es von einer ersten Vorrichtung (300) ausgeführt wird, die folgenden Schritte umfasst:

- Bestimmen eines Anteils einer ersten Beobachtungsdauer, während dem die erste Vorrichtung (300) ein Störsignal mit einer Leistung detektiert, die höher als der Leistungsschwellenwert ist, wobei das Störsignal von einer zweiten Vorrichtung (220) gesendet wird, die auf das Medium zugreift,
- falls der Anteil höher als ein vordefinierter Wert ist, dann
- Ändern des Leistungsschwellenwertes durch Absenken desselben.

2. Verfahren nach Anspruch 1, wobei das Verfahren zum Zugriff auf das Kommunikationsmedium ein Wettbewerbsfenster mit einer Größe, die zwischen einer Anfangsgröße und einer maximalen Größe, die größer als die Anfangsgröße ist, variieren kann, zum Senden einer Nachricht verwendet, wobei jede Nachricht, die gemäß dem Verfahren zum Zugriff auf das Medium von einer Sendevorrichtung gesendet wird, eine Präambel umfasst, wobei das Störsignal nicht einer solchen Nachricht entspricht, die eine Präambel umfasst, wobei das Verfahren die folgenden weiteren Schritte umfasst:

- Bestimmen, während eines zweiten Beobachtungszeitraums, einer ersten kumulierten Dauer, während der das Störsignal auf dem Medium mit einer Leistung, die höher als der geänderte Leistungsschwellenwert ist, detektiert wird,
- Bestimmen, während eines zweiten Beobachtungszeitraums, einer zweiten kumulierten Dauer, während der die Größe des Wettbewerbsfensters größer als seine Anfangsgröße ist,
- Bestimmen des Typs des Störsignals durch Vergleich der ersten kumulierten Dauer und der zweiten kumulierten Dauer.

3. Verfahren nach Anspruch 2, wobei das Verfahren zum Zugriff auf das Kommunikationsmedium einen Schritt der Quittierung einer gesendeten Nachricht umfasst, wobei das Verfahren zum Zugriff auf das Kommunikationsmedium die folgenden weiteren Schritte umfasst:

- Bestimmen eines Wertes einer mittleren Dauer, welche zwischen einem Zeitpunkt, zu dem die erste Vorrichtung (300) eine Entscheidung trifft, eine Nachricht zu senden, und einem Zeitpunkt, zu dem die Nachricht quittiert wird, vergeht,
- falls der Wert der mittleren Dauer größer als ein vordefinierter Wert ist, und
- falls das zuvor bestimmte Störsignal von einem vorbestimmten ersten Typ ist, dann
- Ändern einer Verwaltung des verwendeten Wettbewerbsfensters, derart, dass die Größe des Wettbewerbsfensters fixiert wird oder dass die Größe des Wettbewerbsfensters mit ihrem Anfangswert neu initialisiert wird, wenn eine vordefinierte Größe erreicht ist.

4. Verfahren nach Anspruch 3, wobei das Verfahren zum Zugriff auf das Kommunikationsmedium außerdem die folgenden Schritte umfasst:

- falls der Wert der mittleren Dauer größer als ein vordefinierter Wert ist, und
- falls das zuvor bestimmte Störsignal nicht von dem ersten Typ ist, dann

- Senden einer Nachricht an eine dritte Vorrichtung, wobei die Nachricht eine Anforderung von Informationen über die Durchführung des Verfahrens zum Zugriff auf das Kommunikationsmedium durch die zweite Vorrichtung umfasst,
- Bestimmen, anhand einer Nachricht, die in Antwort auf die eine Anforderung von Informationen umfassende Nachricht empfangen wurde, ob die Störquelle dieses Verfahren zum Zugriff auf ein Kommunikationsmedium durchführt.

5. Verfahren nach Anspruch 4, wobei die dritte Vorrichtung die zweite Vorrichtung oder eine "Server" genannte Vorrichtung, die eine Datenbank umfasst, ist, wobei die Datenbank eine Liste von wenigstens einer Vorrichtung umfasst, die in einer nahen Umgebung der Vorrichtung (300) vorhanden ist, wobei jede Vorrichtung der Liste einem Typ eines Verfahrens zum Zugriff auf das Medium zugeordnet ist.

6. Verfahren nach einem der vorhergehenden Ansprüche, wobei das Kommunikationsmedium ein Medium vom Funk-Typ ist.

7. Verfahren nach dem vorhergehenden Anspruch, wobei das Verfahren zum Zugriff auf das Kommunikationsmedium mit einem Kommunikationsstandard vom Typ IEEE 802.11 konform ist, solange der Leistungsschwellenwert oder die Verwaltung des Wettbewerbsfensters nicht geändert wird.

8. Verfahren nach einem der vorhergehenden Ansprüche, wobei das Verfahren zum Zugriff auf das Kommunikationsmedium außerdem die folgenden Schritte umfasst:

   - wenn der Leistungsschwellenwert oder die Verwaltung des Wettbewerbsfensters geändert wird,
   - Senden einer Nachricht, die anzeigt, dass Störungen auf dem Medium detektiert worden sind, wobei die Nachricht den geänderten Wert des Leistungsschwellenwertes oder eine Angabe der Änderung des Wettbewerbsfensters umfasst,
   - wobei das Senden der Nachricht periodisch oder im Anschluss an den Empfang einer Anforderung erfolgt.

9. Vorrichtung (300), welche Mittel zum Zugriff auf ein drahtloses Kommunikationsmedium umfasst, wobei der Zugriff vom Typ "Mehrfachzugriff mit Trägerprüfung" (Carrier Sense Multiple Support, CSMA) ist, wobei eine "Sendevorrichtung" genannte Vorrichtung, die eine Nachricht auf diesem Medium senden möchte, überprüft, ob das Medium verfügbar ist, bevor sie die Nachricht sendet, wobei das Medium belegt ist, wenn ein Signal, das von einer anderen Vorrichtung stammt und von der Sendevorrichtung detektiert wird, eine Leistung besitzt, die höher als ein vorbestimmter Leistungsschwellenwert ist, **dadurch gekennzeichnet, dass** die Vorrichtung umfasst:

   - Mittel zum Bestimmen eines Anteils einer Beobachtungsdauer, während dem die Vorrichtung (300) ein Störsignal mit einer Leistung detektiert, die höher als der Leistungsschwellenwert ist, wobei das Störsignal von einer anderen Vorrichtung (220) gesendet wird, die auf das Medium zugreift,
   - Mittel zum Ändern des Leistungsschwellenwertes durch Absenken desselben, falls dieser Anteil höher als ein vordefinierter Wert ist.

10. Computerprogrammprodukt, **dadurch gekennzeichnet, dass** es Anweisungen zur Durchführung, durch einen Prozessor (310), des Verfahrens zum Zugriff auf das Kommunikationsmedium nach einem der Ansprüche 1 bis 8, wenn dieses Computerprogramm von dem Prozessor (310) ausgeführt wird, umfasst.

11. Speichermittel, **dadurch gekennzeichnet, dass** sie ein Computerprogramm nach dem vorhergehenden Anspruch speichern.

## Claims

1. Method for access to a wireless communication medium, the access being of the "carrier sense multiple access" (CSMA) type, wherein a device, referred to as the sending device, wishing to send a message over said medium checks whether said medium is available before sending said message, the medium being busy when a signal coming from another device and detected by said sending device has a power higher than a predetermined power threshold, **characterised in that** the method comprises, when it is executed by a first device (300), the following steps of:

   - determining a proportion of a first observation period during which the first device (300) detects an interfering signal with a power higher than said power threshold, the interfering signal being sent by a second device (220) accessing the medium,
   - if said proportion is higher than a predefined value, then
   - modifying the value of the power threshold by lowering it.

2. Method according to claim 1, the method for access to the communication medium using a contention window, with a size that may vary between an initial size and a maximum size greater than the initial size, for sending a message, each message sent according to the medium-access method by a sending device comprising a preamble, the interfering signal not corresponding to such a message comprising a preamble, the method comprising the following subsequent steps:

- determining, during a second observation period, a first cumulative duration during which the interfering signal is detected on the medium with a power higher than the modified value of the power threshold,
- determining, during the second observation period, a second cumulative duration during which the size of the contention window is greater than its initial size,
- determining the type of the interfering signal by comparison of the first cumulative duration and the second cumulative duration.

3. Method according to claim 2, the method for access to the communication medium comprising a step of acknowledgement of a sent message, the method for access to the communication medium comprising the following subsequent steps:

- determining a mean duration that elapses between a moment where the first device (300) takes a decision to send a message and a moment where said message is acknowledged,
- if the value of the mean duration is greater than a predefined value, and,
- if the previously determined interfering signal is of a first predetermined type, then
- modifying management of the contention window used, so as to fix the size of the contention window or to reinitialise the size of the contention window to its initial value when a predefined size is reached.

4. Method according to claim 3, the method for access to the communication medium further comprising the following steps:

- if the value of the mean duration is greater than a predefined value and
- if the previously determined interfering signal is not of said first type, then
- sending a message to a third device, the message comprising a request for information on the implementation the method for access to the communication medium by the second device,
- determining, from a message received in response to said message comprising a request for information, whether the source of interference uses the present method for access to a communication medium.

5. Method according to claim 4, the third device being the second device or a devices, referred to as a server, comprising a data base, the data base comprising a list of at least one device present in a near environment of the device (300), each device in the list being associated with a type of method for access to the medium.

6. Method according to any of the preceding claims, the medium being a medium of the radio type.

7. Method according to the preceding claim, the method for access to the communication medium being in accordance with a communication standard of the IEEE 802.11 type as long as the power threshold or the management of the contention window is not modified.

8. Method according to any of the preceding claims, the method for access to the communication medium further comprising the following steps:

- when the power threshold or the management of the contention window is modified,
- sending a message indicating that interference has been detected on the medium, the message comprising the modified value of the power threshold or an indication of the modification of the contention window,
- the sending of the message taking place periodically or following the reception of a request.

9. Device (300) comprising means for access to a wireless communication medium, the access being of the "carrier sense multiple access" (CSMA) type, in which a device, referred to as the sending device, wishing to send a message over said medium, checks whether said medium is available before sending said message, the medium being busy when a signal coming from another device and detected by said sending device has a power higher than a predetermined power threshold, **characterised in that** the device comprises:

- means for determining a proportion of an observation period during which the device (300) detects an interfering signal with a power higher than the power threshold, the interfering signal being sent by another device (220) accessing the medium,
- means for modifying the value of the power threshold by lowering it if this proportion is higher than a predefined value.

10. program product, **characterised in that** it comprises instructions for the implementation, by a processor (310), of the method for access to the communication medium according to any of claims 1 to 8, when said computer program is executed by said processor (310).

11. Storage means, **characterised in that** they store a computer program according to the preceding claim.

FIG 1
(art antérieur)

FIG 2

FIG 3

FIG 4

400 INIT.

405 OBS.

410 INTERF ?

415 CANAL? — oui

420 SEUIL & OBS. ← non

425 DELTA > — non

oui

430 LTE

440 WiFi MODIFIE

435 PARAM.

445 Fc

450 FIN/ REPET.

**EP 3 391 702 B1**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- WO 2013112983 A
- US 20130343288 A
- US 20150215100 A